# EUROPÄISCHE PATENTSCHRIFT

(11) **EP 3 212 906 B1**
(45) Veröffentlichungstag und Bekanntmachung des Hinweises auf die Patenterteilung: **03.07.2019**
(21) Anmeldenummer: 15784040.6
(22) Anmeldetag: 21.10.2015
(51) Int. Cl.: F01N 3/20

(54) **FÖRDEREINHEIT ZUR FÖRDERUNG EINER FLÜSSIGKEIT**
CONVEYOR UNIT FOR CONVEYING A LIQUID
ENSEMBLE DE POMPAGE POUR LE DÉPLACEMENT D'UN LIQUIDE

(30) Priorität: 31.10.2014 DE 102014115890
(43) Veröffentlichungstag der Anmeldung: 06.09.2017
(73) Patentinhaber: CPT Group GmbH, 30165 Hannover (DE)
(72) Erfinder: DIOUF, Cheikh, F-57530 Silly-sur Nied (FR); MAGUIN, Georges, F-57155 Marly (FR); MERTES, Philippe, F-57380 Faulquemont (FR); SUPERNAT, Frèdèric, F-57260 Dieuze (FR)
(86) Internationale Anmeldenummer: PCT/EP2015/074403
(87) Internationale Veröffentlichungsnummer: WO 2016/066501

(56) Entgegenhaltungen:
- EP-A1- 2 143 959
- WO-A1-2013/178307
- DE-C- 744 795

## Beschreibung

Die Erfindung betrifft eine Fördereinheit zur Förderung einer Flüssigkeit, die insbesondere dazu geeignet ist, ein flüssiges Additiv zur Abgasreinigung einer Abgasbehandlungsvorrichtung in einem Kraftfahrzeug bereitzustellen.

Abgasbehandlungsvorrichtungen, in welchen zur Abgasreinigung ein flüssiges Additiv benötigt wird, sind im Kraftfahrzeug beispielsweise bekannt, um Stickstoffoxidverbindungen im Abgas einer Verbrennungskraftmaschine zu reduzieren. In solchen Abgasbehandlungsvorrichtungen wird üblicherweise das Verfahren der selektiven katalytischen Reduktion (SCR-Verfahren, SCR = Selective Catalytic Reduction) durchgeführt. Bei diesem Verfahren werden Stickstoffoxidverbindungen im Abgas der Verbrennungskraftmaschine mit Hilfe von Ammoniak reduziert. Ammoniak wird in Kraftfahrzeugen normalerweise nicht direkt bevorratet, sondern in Form eines flüssigen Abgasadditivs, welches abgasextern oder abgasintern zu Ammoniak umgesetzt wird. Als flüssiges Abgasadditiv wird besonders häufig Harnstoff-Wasser-Lösung verwendet. Besonders weit verbreitet ist eine 32,5 %ige Harnstoff-Wasser-Lösung, die unter dem Handelsnamen Adblue® erhältlich ist.

Zur Förderung von derartigem flüssigen Additiv zu der Abgasbehandlungsvorrichtung wird üblicherweise eine Fördereinheit eingesetzt. Problematisch bei einer solchen Fördereinheit ist, dass das flüssige Additiv für die Abgasreinigung bei niedrigen Temperaturen einfrieren kann. Die obenstehend beschriebene Harnstoff-Wasser-Lösung friert beispielsweise bei -11 °C ein. Derartig niedrige Temperaturen können bei Kraftfahrzeugen beispielsweise während langer Stillstandsphasen im Winter auftreten. Beim Einfrieren tritt eine Volumenausdehnung des flüssigen Additivs auf, die eine Fördereinheit zur Förderung des flüssigen Additivs beschädigen kann. Dementsprechend ist es notwendig und vorteilhaft, eine Fördereinheit zur Förderung von flüssigem Additiv so zu konstruieren, dass diese durch auftretende Volumenausdehnungen beim Einfrieren nicht zerstört wird.

Bekannt ist es, Kompensationselemente zur Kompensation des Eisdrucks in einer Fördereinheit vorzusehen. Derartige Kompensationselemente sind allerdings zusätzliche Bauteile, die den konstruktiven Aufbau einer Fördereinheit für flüssiges Additiv verkomplizieren.

Beispielsweise zeigt die EP 2 143 959 A1 ein Pumpenaggregat, insbesondere ein mehrstufiges Pumpenaggregat, bei welchen je nach gewünschter Leistung des Pumpenaggregates unterschiedliche Anzahlen von Pumpenstufen aufeinandergesetzt werden. Dabei sind die einzelnen Pumpenstufen vorzugsweise identisch ausgebildet und werden durch geeignete Verbindungsmittel, beispielsweise Spannbänder zusammengehalten.

Ausgehend von diesem Stand der Technik ist es Aufgabe der hier vorliegenden Erfindung, die beschriebenen technischen Probleme zu lösen bzw. zu lindern. Es soll insbesondere eine besonders einfach aufgebaute Fördereinheit zur Förderung einer Flüssigkeit, bzw. insbesondere zur Förderung eines flüssigen Additivs zur Abgasreinigung, beschrieben werden.

Diese Aufgabe wird gelöst mit einer Fördereinheit gemäß den Merkmalen des Patentanspruchs 1. Weitere vorteilhafte Ausgestaltungsvarianten der Fördereinheit sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Beschrieben werden soll eine Fördereinheit zur Förderung einer Flüssigkeit, aufweisend einen Verteilerblock aus Kunststoff zur flüssigkeitsleitenden Anbindung von mindestens einer Komponente zur Förderung der Flüssigkeit, aufweisend mindestens ein metallisches Spannelement, welches den Verteilerblock zumindest bereichsweise außen umgreift.

Eine Fördereinheit zur Förderung einer Flüssigkeit zur Abgasreinigung kann auch als Fördermodul oder auch als Pumpe bezeichnet werden. Eine Fördereinheit hat üblicherweise verschiedene Komponenten, die zur Förderung der Flüssigkeit dienen. Hierzu zählt in erster Linie mindestens eine Pumpe, welche die Förderfunktion der Flüssigkeit übernimmt. Darüber hinaus können Sensoren, Ventile, Schaltungen, Steuergeräte, Antriebe und weitere Komponenten vorgesehen sein, mit welchen die Förderung gesteuert, geregelt oder überwacht wird.

Um die verschiedenen Komponenten und insbesondere die hydraulische Komponente einer Fördereinheit miteinander flüssigkeitsleitend zu verbinden, bzw. um einen Förderweg für Flüssigkeit von einer Ansaugstelle zu einer Abgabestelle durch die Fördereinheit hindurch bereitzustellen, existiert ein Verteilerblock, welcher die verschiedenen Komponenten der Fördereinheit miteinander verbindet. In dem Verteilerblock können beispielsweise Kanäle vorgesehen sein, durch welche die Flüssigkeit strömt, die die Komponenten der Fördereinheit miteinander verbinden und die zumindest abschnittsweise den Förderweg ausbilden.

Es ist besonders vorteilhaft, wenn der Verteilerblock aus Kunststoff ist. Der Verteilerblock ist beispielsweise aus Polyethylen (PE, insbesondere HD-PE, HD-PE = high density Polyethylen) oder Polyoxymethylen (POM) . Ein Verteilerblock aus Kunststoff ist besonders einfach und kostengünstig herzustellen, beispielsweise mit Hilfe eines Spritzgussverfahrens. Bei der Herstellung des Verteilerblocks mit einem Spritzgußverfahren können Kanäle in dem Verteilerblock der Fördereinheit direkt mit eingegossen werden. Ein Verteilerblock aus Kunststoff hat allerdings häufig keine ausreichende mechanische Stabilität um auch bei unterschiedlichen Drücken, die während der Förderung einer Flüssigkeit auftreten, ausreichend stabil zu sein. Insbesondere Druckpulse, die durch den Betrieb einer Pumpe auftreten, können den Förderblock verformen und so die Funktionstüchtigkeit einer Fördereinheit beeinträchtigen.
Bei der hier beschriebenen Fördereinheit ist außen um den Verteilerblock aus Kunststoff herum ein metallisches Spannelement vorgesehen, welches dem Verteilerblock eine hohe mechanische Steifigkeit gibt und insbesondere dafür sorgt, dass der Verteilerblock und Komponenten des Verteilerblocks sich nicht voneinander lösen, wenn ein erhöhter Druck der Flüssigkeit innerhalb der Fördereinheit auftritt. Ein solches Spannelement stellt eine besonders einfache Methode dar, einen Verteilerblock aus Kunststoff nachträglich von außen zu verstärken, ohne dass hierfür zusätzliche komplizierte Montageschritte erforderlich sind, und ohne dass hierfür besondere Versteifungsstrukturen in dem Verteilerblock selbst vorgesehen sein müssen.

Besonders vorteilhaft ist die Fördereinheit, wenn der Verteilerblock u-förmig ausgebildet ist und einen Grundkörper sowie zwei Schenkel aufweist, und wobei mindestens eine Komponente zur Förderung der Flüssigkeit eine Pumpe ist, die zwischen den beiden Schenkeln des Verteilerblocks angeordnet ist, wobei die beiden Schenkel mit dem metallischen Spannelement gegeneinander verspannt sind. Eine derartige Anordnung einer Pumpe zwischen zwei Schenkeln des Verteilerblocks ermöglicht es, die Pumpe besonders fest einzuspannen. Von der Pumpe erzeugte Druckpulse in der Flüssigkeit können die beiden Schenkel des Verteilerblocks regelmäßig auseinander drücken. Dies ist insbesondere problematisch, weil der Verteilerblock aus Kunststoff ist und daher keine besonders hohe eigene Steifigkeit aufweist. Aus diesem Grund ist es besonders vorteilhaft, ein metallisches Spannelement zu verwenden, um die beiden Schenkel von außen gegeneinander zu verspannen. Das Spannelement ist besonders bevorzugt so angeordnet, dass die von dem Spannelement auf den Verteilerblock ausgeübte Spannkraft parallel zur Wirkrichtung von Druckpulsen ist, die von der Pumpe ausgelöst werden. Diese Wirkrichtung von Druckpulsen ist üblicherweise parallel zur Ausrichtung des Förderwegs im Bereich eines Flüssigkeitsauslasses der Pumpe.
Innerhalb der Schenkel des Verteilerblocks sind vorzugsweise Kanäle vorgesehen, wobei vorzugsweise ein Schenkel Kanäle aufweist, durch die die Pumpe Flüssigkeit ansaugt und ein weiterer Schenkel Kanäle aufweist, durch welche die Pumpe Flüssigkeit ausstößt oder abgibt.

Weiterhin vorteilhaft ist die Fördereinheit, wenn das metallische Spannelement eine Feder ist, die eine Verformung des Verteilerblocks zulässt, wenn in flüssigkeitsleitenden Kanälen in dem Verteilerblock durch einfrierende Flüssigkeit Eisdruck entsteht.

Weiter oben wurde bereits beschrieben, dass durch einfrierende Flüssigkeit in dem Verteilerblock eine Volumenausdehnung auftritt, die die Fördereinheit beschädigen kann. Dadurch, dass das Spannelement eine Feder ist, welche eine Verformung des Verteilerblocks zulässt, wenn in flüssigkeitsleitenden Kanälen in dem Verteilerblock durch einfrierende Flüssigkeit ein Eisdruck entsteht, kann in den flüssigkeitsleitenden Kanälen durch den Eisdruck zusätzlicher Raum geschaffen werden, der die Volumenausdehnung beim Einfrieren aufnimmt, so dass eine Zerstörung der Fördereinheit verhindert wird.

Weiterhin vorteilhaft ist die Fördereinheit, wenn der Verteilerblock einen Grundkörper sowie mindestens einen Schenkel aufweist, welcher mit mindestens einer Steckverbindung mit dem Grundkörper verbunden ist.

Eine Steckverbindung zur Verbindung eines Grundkörpers des Verteilerblocks und eines Schenkels des Verteilerblocks ist eine besonders einfache Verbindung, die mit geringem Montageaufwand montiert werden kann, die jedoch nicht geeignet ist, um hohen Drücken innerhalb eines Kanals in dem Verteilerblock zu widerstehen. Eine Steckverbindung zur Anbindung eines Schenkels an einen Grundkörper eines Verteilerblocks wird bevorzugt nur verwendet, wenn durch diese Anbindung nur Kanäle verlaufen, in denen niedrige Drücke der Flüssigkeit auftreten. Insbesondere Kanäle, die in Förderrichtung vor der Pumpe stromauf der Pumpe angeordnet sind, dürfen durch die Anbindung von Schenkeln verlaufen, die mit Steckverbindungen an einem Grundkörper montiert sind. Solche Kanäle stromauf der Pumpe können auch als Saugkanäle oder als Niederdruckkanäle bezeichnet werden. Steckverbindungen sind auch zur Anbindung von Schenkeln oder von Abschnitten an den Verteilerblock geeignet, wenn durch die Anbindung keine Kanäle verlaufen.

Weiterhin vorteilhaft ist die Fördereinheit, wenn der Verteilerblock einen Grundkörper sowie mindestens einen Schenkel aufweist, welcher mit mindestens einer Schraubverbindung mit dem Grundkörper verbunden ist.

Schraubverbindungen zur Anbindung von Schenkeln an einen Grundkörper eines Verteilerblocks sind insbesondere vorteilhaft, wenn durch diese Anbindung Kanäle verlaufen, in denen hohe Drücke in der Flüssigkeit auftreten. Insbesondere Kanäle, die in Förderrichtung hinter der Pumpe stromab der Pumpe angeordnet sind, dürfen durch die Anbindung von Schenkeln verlaufen, die mit Schraubverbindungen an einem Grundkörper montiert sind. Solche Kanäle stromab der Pumpe können auch als Druckkanäle oder sogar als Hochdruckkanäle bezeichnet werden.

Es hat sich herausgestellt, dass Steckverbindungen nicht geeignet sind, um unter Hochdruck stehende Kanalabschnitte eines Kanals einer Fördereinheit flüssigkeitsdicht miteinander zu verbinden. Daher ist es vorteilhaft für die Anbindung von Schenkeln mit Niederdruckkanälen an einen Verteilerblock, relativ einfach zu montierende, kostengünstige Steckverbindungen zu verwenden, während zur Anbindung von Schenkeln mit Hochdruckkanälen an einen Verteilerblock Schraubverbindungen verwendet werden.

Besonders vorteilhaft ist die Fördereinheit außerdem, wenn der Verteilerblock mindestens eine Aufnahme zur kraftübertragenden Fixierung des mindestens einen Spannelements hat.

Eine derartige Aufnahme kann beispielsweise eine Vertiefung außen an dem Verteilerblock sein, in welchen ein Abschnitt des Spannelements eingreift. Eine derartige Vertiefung kann beispielsweise einseitig angeschrägt sein, um eine vereinfachte Montage des Spannelements an dem Verteilerblock zu ermöglichen. Vorzugsweise hat eine derartige Aufnahme auch einen Abschnitt, an welchem sich das Spannelement bzw. ein Abschnitt des Spannelements verhakt, so dass das Spannelement dauerhaft und sicher an dem Verteilerblock fixiert ist.

Weiterhin vorteilhaft ist die Fördereinheit, wenn die Fördereinheit ein Gehäuse aufweist, in welchem der Verteilerblock mit der mindestens einen Komponente angeordnet ist.

Der Verteilerblock ist durch ein derartiges Gehäuse gegenüber äußeren Einflüssen geschützt. Ein derartiges Gehäuse mit einer Fördereinheit darin kann beispielsweise in einen Tankboden eines Tanks für flüssiges Additiv zur Abgasreinigung eingesetzt werden, und über eine an dem Gehäuse angeordnete Saugstelle flüssiges Additiv aus dem Tank entnehmen und an einem Bereitstellungsanschluss bereitstellen. Vorzugsweise hat ein Gehäuse Montagepunkte, an denen der beschriebene Verteilerblock der Fördereinheit befestigt werden kann, so dass dieser an dem Gehäuse fest fixiert ist. Vorzugsweise liegt der Verteilerblock im Bereich der Saugstelle unmittelbar an dem Gehäuse an, und besonders bevorzugt weist der Verteilerblock einen Kanal auf, der flüssigkeitsdicht an der Saugstelle an dem Gehäuse abdichtet.

Außerdem vorteilhaft ist die Fördereinheit, wenn das metallische Spannelement aus einem Draht besteht und zumindest einen vorgespannten Abschnitt aufweist.

Ein Draht ermöglicht eine besonders einfache Fertigung eines metallischen Spannelements. Ein vorgespannter Abschnitt kann beispielsweise ein vorgebogener Abschnitt sein, welcher eine erhöhte Biegung hat, die durch das Aufsetzen des Spannelements auf den Verteilerblock wiederum etwas reduziert wird und so eine Vorspannung auf den Verteilerblock aufbringt. Dies ermöglicht es, besonders einfach ein sehr wirkungsvolles Spannelement bereitzustellen.

Hier auch beschrieben werden soll ein Kraftfahrzeug, aufweisend eine Verbrennungskraftmaschine, eine Abgasbehandlungsvorrichtung mit einem SCR-Katalysator zur Reinigung der Abgase der Verbrennungskraftmaschine und mindestens eine beschriebene Fördereinheit zur Förderung einer Flüssigkeit zur Abgasreinigung zu der Abgasbehandlungsvorrichtung.

Die beschriebene Fördereinheit ist insbesondere zur Förderung von flüssigen Additiven zur Abgasreinigung geeignet, weil flüssige Additive zur Abgasreinigung regelmäßig einfrieren können und weil die beschriebene Fördereinheit eine besonders hohe Sicherheit aufweist, durch eine Volumenausdehnung beim Einfrieren nicht beschädigt zu werden.

Die Erfindung sowie das technische Umfeld werden nachfolgend anhand der Figuren näher erläutert. Es ist darauf hinzuweisen, dass die Figuren nur schematisch sind und insbesondere die in den Figuren dargestellten Größenverhältnisse nur schematisch sind. Es zeigen:
- Fig. 1:: eine erste Ansicht einer beschriebenen Fördereinheit,
- Fig. 2:: eine zweite Ansicht einer beschriebenen Fördereinheit, und
- Fig. 3:: ein Kraftfahrzeug aufweisend eine beschriebene Fördereinheit.

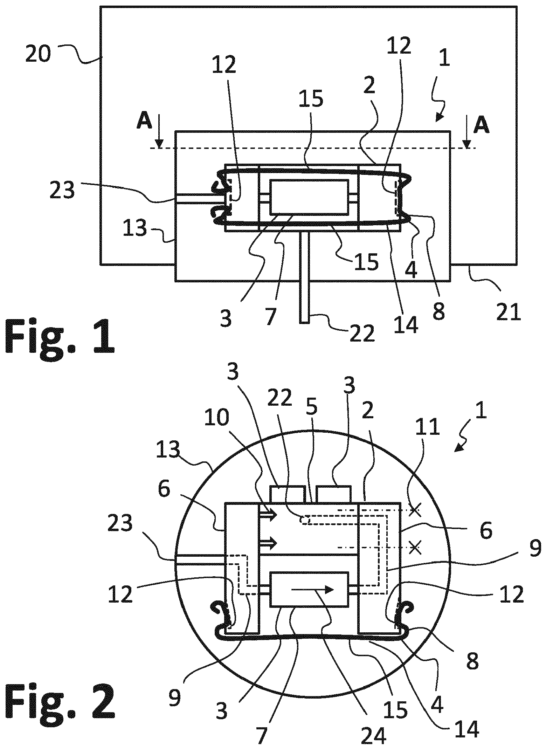

Fig. 1 zeigt eine Fördereinheit 1, welche in einem Tank 20 für eine Flüssigkeit eingesetzt ist. Die Fördereinheit 1 hat ein Gehäuse 13, in welchem sich ein Verteilerblock 2 befindet. An dem Verteilerblock 2 ist eine Pumpe 7 zur Förderung der Flüssigkeit als aktive Komponente 3 der Fördereinheit 1 befestigt. Die Pumpe 3 entnimmt Flüssigkeit aus dem Tank 20 an einer Ansaugstelle 23 und stellt die Flüssigkeit an einem Bereitstellungsanschluss 22 bereit. Die Fördereinheit 1 ist in einem Tankboden 21 des Tanks 20 eingesetzt. Der Verteilerblock 2 der Fördereinheit 1 ist von einem Spannelement 4 umgeben, welches als Feder 8 ausgeführt ist und welches aus einem Draht 14 gefertigt ist und zwei vorgespannte Abschnitte 15 hat. Die vorgespannten Abschnitte 15 sorgen dafür, dass das Spannelement 4 eine Kraft auf den Verteilerblock 2 ausübt und den Verteilerblock 2 somit verspannt.

Fig. 2 zeigt den in Fig. 1 bereits angedeuteten Schnitt A-A durch die dort beschriebene Fördereinheit 1. Zu erkennen ist auch hier das Gehäuse 13 mit dem darin angeordneten Verteilerblock 2, an welchem sich als Komponente 3 die Pumpe 7 befindet. An der Pumpe 7 ist auch eine Förderrichtung 24 angedeutet, mit welcher Flüssigkeit durch die Fördereinheit 1 von der Ansaugstelle 23 zu dem Bereitstellungsanschluss 22 gefördert wird. Angedeutet ist auch ein Kanal 9, entlang welchem die Flüssigkeit durch die Fördereinheit 1 fließt. Zu erkennen ist, dass entlang der Förderrichtung 24 der Kanal 9 stromauf der Pumpe ein Niederdruckbereich bildet und in Förderrichtung 24 stromab (das heißt hinter der Pumpe 7) einen Hochdruckbereich bildet. In dem Hochdruckbereich liegen aufgrund der Druckerhöhung durch die Pumpe 7 erhöhte Drücke der Flüssigkeit vor.
Weiterhin zu erkennen ist das beschriebene Spannelement 4, welches als Feder 8 aus Draht 14 mit vorgespannten Abschnitten 15 ausgeführt ist und welches den Verteilerblock 2 außen umgreift. Der Verteilerblock 2 ist hier mit einem Grundkörper 5 sowie zwei Schenkeln 6 ausgeführt, wobei der linke Schenkel 6 einen Niederdruckbereich des Kanals 9 bildet und mit einer Steckverbindung an den Grundkörper 5 angesteckt ist, während der rechte Schenkel 6 einen Hochdruckbereich des Kanals bildet und mit einer Schraubverbindung 11 an den Grundkörper 5 angeschraubt ist. Neben der Pumpe 7 als Komponente 3 sind hier schematisch im oberen Bereich des Verteilerblocks 2 noch zwei weitere Komponenten 3 dargestellt, die beispielsweise ein Ventil oder ein Sensor sein können.

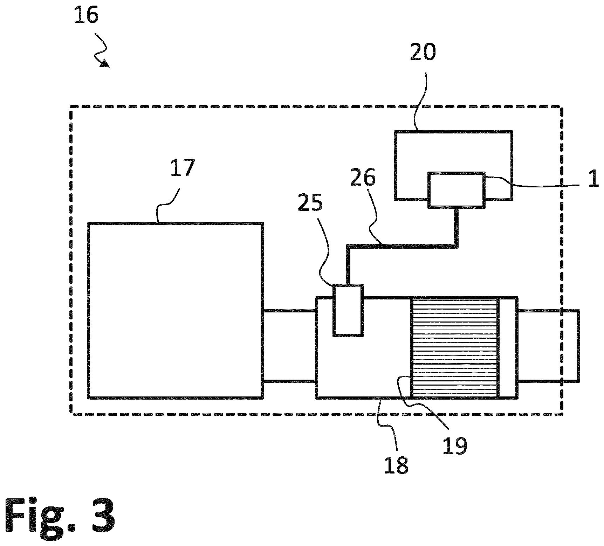

Die Fig. 3 zeigt ein Kraftfahrzeug 16 mit einer Verbrennungskraftmaschine 17 und einer Abgasbehandlungsvorrichtung 18, aufweisend einen SCR-Katalysator 19. Der Abgasbehandlungsvorrichtung 18 kann ein flüssiges Additiv zur Abgasreinigung mit einem Injektor 25 zugeführt werden, welcher mit flüssigem Additiv zur Abgasreinigung aus einem Tank 20 von einer Fördereinheit 1 über eine Leitung 26 versorgt wird.

## Patentansprüche

1. Fördereinheit (1) zur Förderung einer Flüssigkeit, aufweisend einen Verteilerblock (2) aus Kunststoff zur flüssigkeitsleitenden Anbindung von mindestens einer Komponente (3) zur Förderung der Flüssigkeit, aufweisend mindestens ein metallisches Spannelement (4), welches den Verteilerblock (2) zumindest bereichsweise außen umgreift, **dadurch gekennzeichnet, dass** der Verteilerblock (2) u-förmig ausgebildet ist und einen Grundkörper (5) sowie zwei Schenkel (6) aufweist und wobei mindestens eine Komponente (3) zur Förderung der Flüssigkeit eine Pumpe (7) ist, die zwischen den beiden Schenkeln (6) des Verteilerblocks (2) angeordnet ist, wobei die beiden Schenkel (6) mit dem metallischen Spannelement (4) gegeneinander verspannt sind..

2. Fördereinheit (1) nach einem der vorhergehenden Patentansprüche, wobei das metallische Spannelement (4) eine Feder (8) ist, die eine Verformung des Verteilerblocks (2) zulässt, wenn in flüssigkeitsleitenden Kanälen (9) in dem Verteilerblock (2) durch einfrierende Flüssigkeit ein Eisdruck entsteht.

3. Fördereinheit (1) nach einem der vorhergehenden Patentansprüche, wobei der Verteilerblock (2) einen Grundkörper (5) sowie mindestens einen Schenkel (6) aufweist, welcher mit mindestens einer Steckverbindung (10) mit dem Grundkörper (5) verbunden ist.

4. Fördereinheit (1) nach einem der vorhergehenden Patentansprüche, wobei der Verteilerblock (2) einen Grundkörper (5) sowie mindestens einen Schenkel (6) aufweist, welcher mit mindestens einer Schraubverbindung (11) mit dem Grundkörper (5) verbunden ist.

5. Fördereinheit (1) nach einem der vorhergehenden Patentansprüche, wobei der Verteilerblock (2) mindestens eine Aufnahme (12) zur kraftübertragenden Fixierung des mindestens einen Spannelementes (4) hat.

6. Fördereinheit (1) nach einem der vorhergehenden Patentansprüche, wobei die Fördereinheit (1) ein Gehäuse (13) aufweist, in welchem der Verteilerblock (2) mit der mindestens einen Komponente (3) angeordnet ist.

7. Fördereinheit (1) nach einem der vorhergehenden Patentansprüche, wobei das metallische Spannelement (4) aus einem Draht (14) besteht und zumindest einen vorgespannten Abschnitt (15) aufweist.

8. Kraftfahrzeug (16), aufweisend eine Verbrennungskraftmaschine (17), eine Abgasbehandlungsvorrichtung (18) mit einem SCR-Katalysator (19) zur Reinigung der Abgase der Verbrennungskraftmaschine (17) und mindestens eine Fördereinheit (1) nach einem der vorhergehenden Patentansprüche zur Förderung einer Flüssigkeit zur Abgasreinigung zu der Abgasbehandlungsvorrichtung (18).

## Claims

1. Delivery unit (1) for delivering a liquid, having a distributor block (2), composed of plastic, for the liquid-conducting connection of at least one component (3) for delivering the liquid, having at least one metallic clamping element (4) which engages around the outside of the distributor block (2) at least in regions, **characterized in that** the distributor block (2) is of U-shaped form and has a main body (5) and two legs (6), and wherein at least one component (3) for delivering the liquid is a pump (7) which is arranged between the two legs (6) of the distributor block (2), wherein the two legs (6) are braced against one another by means of the metallic clamping element (4).

2. Delivery unit (1) according to one of the preceding patent claims, wherein the metallic clamping element (4) is a spring (8) which permits a deformation of the distributor block (2) if an ice pressure is generated by freezing liquid in liquid-conducting ducts (9) in the distributor block (2).

3. Delivery unit (1) according to one of the preceding patent claims, wherein the distributor block (2) has a main body (5) and at least one leg (6) which is connected to the main body (5) by way of at least one plug-in connection (10).

4. Delivery unit (1) according to one of the preceding patent claims, wherein the distributor block (2) has a main body (5) and at least one leg (6) which is connected to the main body (5) by way of at least one screw connection (11).

5. Delivery unit (1) according to one of the preceding patent claims, wherein the distributor block (2) has at least one receptacle (12) for force-transmitting fixing of the at least one clamping element (4).

6. Delivery unit (1) according to one of the preceding patent claims, wherein the delivery unit (1) has a housing (13) in which the distributor block (2) together with the at least one component (3) is arranged.

7. Delivery unit (1) according to one of the preceding patent claims, wherein the metallic clamping element (4) is composed of a wire (14) and has at least one prestressed section (15).

8. A motor vehicle (16) having an internal combustion engine (17), having an exhaust-gas treatment device (18) with an SCR catalytic converter (19) for the purification of the exhaust gases of the internal combustion engine (17), and having at least one delivery unit (1) according to one of the preceding patent claims for delivering a liquid for exhaust-gas purification to the exhaust-gas treatment device (18).

## Revendications

1. Unité de transport (1) pour le transport d'un liquide, présentant un bloc de répartition (2) en matière plastique pour la connexion avec transport de liquide d'au moins un composant (3) pour le transport du liquide, présentant au moins un élément de serrage métallique (4), qui entoure extérieurement au moins localement le bloc de répartition (2), **caractérisée en ce que** le bloc de répartition (2) est réalisé en forme de U et présente un corps de base (5) ainsi que deux branches (6) et dans laquelle au moins un composant (3) pour le transport du liquide est une pompe (7), qui est disposée entre les deux branches (6) du bloc de répartition (2), dans laquelle les deux branches (6) sont serrées l'une contre l'autre avec l'élément de serrage métallique (4).

2. Unité de transport (1) selon la revendication précédente, dans laquelle l'élément de serrage métallique (4) est un ressort (8), qui permet une déformation du bloc de répartition (2), lorsqu'il apparaît une pression de glace dans des canaux de transport de liquide (9) dans le bloc de répartition (2) en raison de liquide congelé.

3. Unité de transport (1) selon l'une quelconque des revendications précédentes, dans laquelle le bloc de répartition (2) présente un corps de base (5) ainsi qu'au moins une branche (6), qui est assemblée au corps de base (5) par au moins un assemblage par broche (10).

4. Unité de transport (1) selon l'une quelconque des revendications précédentes, dans laquelle le bloc de répartition (2) présente un corps de base (5) ainsi qu'au moins une branche (6), qui est assemblée au corps de base (5) par au moins un assemblage à vis (11).

5. Unité de transport (1) selon l'une quelconque des revendications précédentes, dans laquelle le bloc de répartition (2) comporte au moins un logement (12) pour la fixation avec transmission de force dudit au moins un élément de serrage (4).

6. Unité de transport (1) selon l'une quelconque des revendications précédentes, dans laquelle l'unité de transport (1) présente un boîtier (13), dans lequel le bloc de répartition (2) avec ledit au moins un composant (3) est disposé.

7. Unité de transport (1) selon l'une quelconque des revendications précédentes, dans laquelle l'élément de serrage métallique (4) se compose d'un fil (14) et présente au moins une partie précontrainte (15).

8. Véhicule à moteur (16), présentant un moteur à combustion interne (17), un dispositif de traitement des gaz d'échappement (18) avec un catalyseur SCR (19) pour l'épuration des gaz d'échappement du moteur à combustion interne (17) et au moins une unité de transport (1) selon l'une quelconque des revendications précédentes, pour le transport d'un liquide destiné à l'épuration des gaz d'échappement au dispositif d'épuration des gaz d'échappement (18).
